Europäisches Patentamt

(19) European Patent Office

Office européen des brevets

(11) Publication number : **0 448 149 B1**

(12) **EUROPEAN PATENT SPECIFICATION**

(45) Date of publication of patent specification :
17.08.94 Bulletin 94/33

(51) Int. Cl.⁵ : **A22C 9/00**

(21) Application number : **91200503.0**

(22) Date of filing : **07.03.91**

(54) Continuously operating massage drum, and method for massaging meat.

(30) Priority : **21.03.90 NL 9000664**

(43) Date of publication of application :
**25.09.91 Bulletin 91/39**

(45) Publication of the grant of the patent :
**17.08.94 Bulletin 94/33**

(84) Designated Contracting States :
**AT BE CH DE DK ES GB IT LI NL SE**

(56) References cited :
**EP-A- 0 211 134**
**CH-A- 571 823**
**DE-U- 8 805 657**
**GB-A- 1 232 905**
**GB-A- 2 085 742**
**US-A- 4 441 231**

(73) Proprietor : **NEDERLANDSE ORGANISATIE VOOR TOEGEPAST-NATUURWETENSCHAPPELIJK ONDERZOEK TNO**
**148, Juliana van Stolberglaan**
**NL-2501 BD 's-Gravenhage (NL)**

(72) Inventor : **Logtenberg, Harry**
**10, Venuslaan**
**NL-3721 VG Bilthoven (NL)**

(74) Representative : **van der Kloet-Dorleijn, Geertruida W.F., Drs. et al**
**EXTERPATENT B.V.**
**P.O. Box 3241**
**NL-2280 GE Rijswijk (NL)**

EP 0 448 149 B1

## Description

The invention relates to a continuously operating massage drum, in particular suitable for mechanically massaging salted or unsalted meat products, provided with drive means for rotating the drum, about the longitudinal axis of the drum, the drum being provided with end plates with a feed and discharge aperture respectively, and the drum comprising a wall having portions thereof comprising inwardly projecting massage elements.

Such a massage drum is known, and comprises massaging elements in the form of 3 blades. This known device operates batchwise and is suitable only for churning and massaging hams in batches for a fairly long period. The purpose of massaging and churning is to speed up the distribution of the brine ingredients in meat products, while an improvement in yield is also achieved as a result of the reduction in moisture loss during heating.

This device is not suitable for the massage of fairly thin and elongated meat products such as, for example, bacon cuts because, owing to their elongated shape, these meat products are easily dragged along during rotation of the drum and then fall down. The products to be massaged are therefore easily damaged and products which are less attractive in appearance are obtained because of smearing with fat and/or the loss of proteins.

Besides, a massage drum for massaging salted products must be simple in design, so that the drum is easy to clean, partly on account of the corrosive action of salt.

The known drum is not, however, easy to clean. In practice, this drum can also be used only batchwise.

A massage drum which does not have the above-mentioned disadvantages and can be used continuously, in particular for the treatment of bacon cuts, has now been found.

The massage drum according to the invention is characterized in that the massage elements are formed by the surface of the inside wall which is continuously ribbed in the peripheral direction and comprising angular transitions projecting into said drum, the summits of said transition being interconnected by straight wall parts of the drum, with the radially outward intersections of said wall parts defining the circumference of said massage drum.

It is pointed out that the massaging of meat products is carried out in order to make the internal structure more open, through the formation of capillaries between the meat cells. Moisture already present and/or added moisture can become better distributed through these capillaries and is therefore better absorbed or retained by the meat.

It has been found that the massage elements according to the invention do not damage the meat products, so that products which are unattractive for the consumer are not obtained.

The massage elements according to the invention carry out the massage treatment during rotation of the drum, and the meat products are moved in the drum, as it were, gliding over the projecting parts. Since the meat products are not held by projecting parts during this movement, as is the case with the known massage drum, no damage occurs either.

Besides, the massage elements according to the invention permit very easy cleaning of the drum. This is, of course, beneficial for the quality and shelf life of products thus massaged.

However, an embodiment which is particularly advantageous in practice and is therefore preferred is one in which the inside wall of the drum has an star-shaped cross-section.

In order to be able to make the massage drum operate continuously, the drum is erected inclined, preferably in such a way that the axis of the drum is at an angle of 3 - 10°, in particular approximately 6°.

In order also to keep the residence time of the meat products as constant as possible, the massage drum is preferably provided with means for reducing residence time spread. Such means are expediently adapted to the internal shape of the drum. The occurrence of a certain residence time spread in fact adversely affects the functioning of the massage drum, due to the fact that:
- certain meat products placed in the drum can escape the massage treatment if they run faster through the drum, or
- certain meat products are treated for an unnecessarily long period if there is a slower run through the drum, so that there is a risk of damage.

According to an expedient embodiment, the residence time spread reducing means are detachably fixed in the massage drum. The result of such a fixing is that the whole drum is easy to clean.

The residence time spread reducing means preferably comprise an internal thread of in particular 0.1 - 0.8 m, preferably approximately 0.2 - 0.5 m.

The residence time spread reducing means preferably ensure a residence time of 3 to 12 min. for the meat products in the massage drum, expediently approximately 8 min.

It has been found that if the drive means rotate the drum at a speed of 1 - 8 revolutions per minute, undamaged, massaged meat products are obtained. The optimum massage treatment takes place at a speed of approximately 3 revolutions per minute.

The invention also relates to a method for mechanically massaging salted meat products which are ready for consumption, through the fact that meat products are treated internally and externally with a salt solution and massaged. The usual preparation process involves the injection of the meat products with a salt solution (brine) using a multi-needle brine injector, following which the meat products are in practice laid for 24 hours or even 48 hours in a curing brine (salt solution) and then drained for at least 72 hours. This method of preparation means that the production time is at least 4 days.

A disadvantage is, however, that the meat products thus obtained are not consistent enough in quality. The salt distribution in particular is not homogeneous, and this sometimes leads to an insufficiently long shelf life, while the quality monitoring is of a repressive nature, which means that direct adjustment of the production is not possible.

A method has now been found by which it is possible to obtain in a very short time of less than 10 minutes massaged salted meat products ready for consumption which have a salt percentage which is predetermined according to consumer requirements.

The method of the invention is characterized in that the meat products injected with a salt solution are subjected to a surface salting and the products thus treated are massaged in a massage drum according to the invention.

It is possible in this way to obtain meat products of which the salt percentage (calculated as sodium chloride) lies between 4% and 7% salt relative to the moisture and salt content (the so-called brine percentage).

It has been found that the surface salting after injection is necessary in order to obtain meat products with a high enough salt percentage, which gives them a long enough shelf life.

The invention therefore has the following advantages over the known method:
- a speeding-up (mechanization) of the process while retaining or improving the characteristic properties of the product;
- a more consistent product quality;
- a reduction of the number of operations during the production process;
- a reduction of the necessary production space; and
- a reduction of the drip percentage in the pack of the massaged, injected and salt-blasted meat products to less than 1%.

It is pointed out that the drip percentage D is calculated from the following equation:

$$D = [1 - \frac{c}{a - b}] \times 100\%$$

in which:
a = the weight of the packed meat products
b = the weight of the pack
c = the weight of the meat products after removal from the pack and after 10 min. draining.

It is preferable to massage the injected meat products which have undergone surface salting, such as bacon cuts, in a massage drum according to the invention which is rotating at a speed of 1 - 8 revolutions per minute, expediently approximately 3 r.p.m., while the residence time of the meat products in the massage drum is 2 - 6 min, preferably approximately 3 min.

The massage of the injected meat products which may also have undergone a surface salting has a clear effect on reducing the degree of drip formation in the pack. The meat products preferably have a drip formation of a maximum of 1.0% after refrigerated storage of approximately 2 days in the pack, which is a requirement for such products.

It has also been found to be particularly expedient to massage the meat products in the crosswise direction, i.e. essentially perpendicular to the axis of rotation of the massage drum, of course at the above-mentioned speed of rotation.

A higher speed of rotation of the massage drum causes slight external discoloration of the meat products, probably caused by smearing of fat and/or the loss of proteins.

The invention is explained in greater detail with reference to an example of an embodiment and appended drawing, in which:
Fig. 1 shows schematically in cross-section a known massage drum;
Fig. 2 shows a massage drum according to a first variant according to the invention;
Fig. 3 shows another known massage drum in cross-section;
Fig. 4 shows a massage drum according to the invention which is especially preferable;
Fig. 5 shows a massage drum according to the invention, provided with a thread adapted to the shape of the drum.

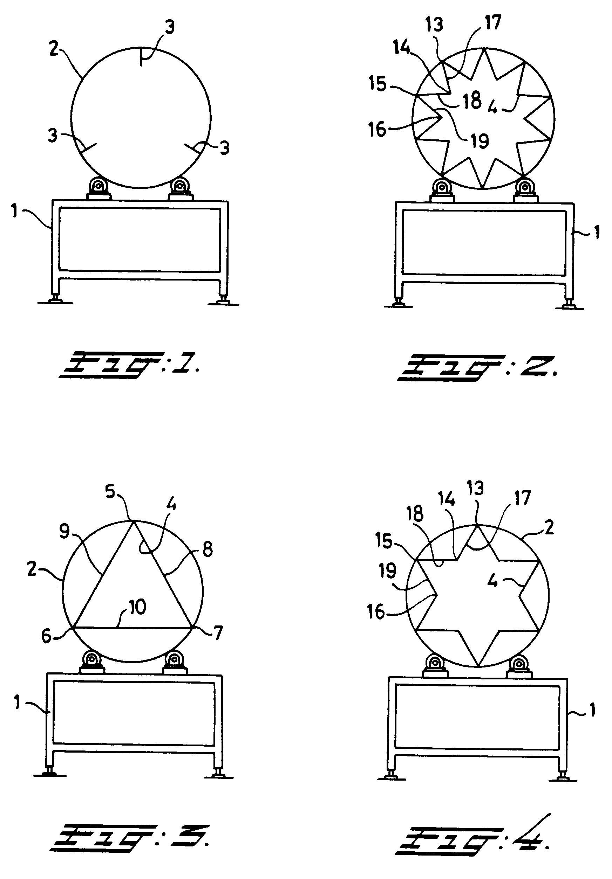

Fig. 1 shows schematically a known massage drum for massaging meat products. For simplification, this drum is placed on a roller bench. Of course, the drive can take place in any other suitable manner.

This known discontinuous, batchwise operating drum comprises a pipe with an internal diameter of 0.57 m which is provided with two closed end plates (not shown), one end plate of which is detachable for the infeed or discharge of the meat products. The internal surface of the drum (2) is provided with massage elements in the form of three blades (3).

During the massage of meat products in the massage drum shown in Fig. 1 the meat products are, however, easily damaged, so that discoloration occurs and the shelf life is reduced. Besides, this known drum is not easy to clean, while the infeed of the meat products to be treated has to take place batchwise.

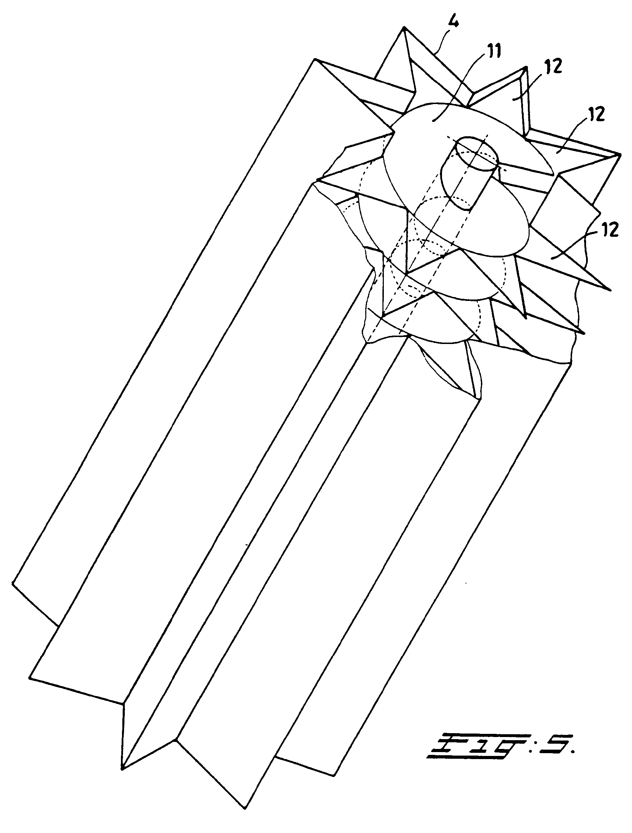

Fig. 2 shows a first embodiment of a massage drum (2) according to the invention. The internal surface is in this case provided with a continuously ribbed surface 4 in the peripheral direction. This embodiment is easy to clean.

The massage drum is preferably set up slanting, at an angle of approximately 3 - 10°, expediently approximately 6°, in order to keep the residence time of the meat products to be massaged as constant as possible.

Fig. 3 shows a known massage drum having a triangular cross-section, formed by angular transitions (5, 6, 7) which are interconnected by essentially straight wall parts (8, 9, 10). As clearly appears from this figure any massage element projecting into the drum is missing.

Figs. 4 shows, also in cross-section, a preferred embodiment of a massage drum according to the invention, having a star-shaped cross-section. The inside wall (4) of the drum (2) comprises angular transitions (14, 16) projecting in the drum, which are interconnected by essentially straight wall parts (18, 19).

The massage drum shown in Fig. 4, is star-shaped in cross-section. Such a shape is surprisingly found to make it possible to obtain massaged, salted meat products with a very low drip percentage.

Fig. 5 shows a massage drum according to the invention which is provided with an internal thread. More particularly, the thread consists of a worm 11 which is provided with blades 12 engaging in the tips of the massage drum 4, and being of a shape essentially corresponding to the shape of the tips of the massage drum. In this way it is ensured that the meat products are massaged in the crosswise direction, essentially perpendicular to the axis of rotation of the massage drum.

In order to make the massage drum easier to clean, the thread is fixed detachably.

The massage drum according to the invention is preferably provided with an internal thread of 0.1 to 0.8 m. More particularly, the massage drum is provided with an internal thread of approximately 0.2 m for backs in bacon preparation and approximately 0.45 m for middles in bacon preparation.

It is pointed out that middles have dimensions of 40 x 50 to 60 cm, while backs have dimensions of 20 x 50 to 60 cm.

Of course, the embodiments shown in Figs. 2 and 4 can also be provided with a preferably detachably fitted internal thread, and the drums can be arranged in a slanting manner, as explained above.

The massage drum according to the invention can also be made up of an external cylindrical drum (2) and an internal drum (4) which has the inside wall surface according to the invention.

For simplification and improvement of cleaning, the external cylindrical drum (2) can be replaced by several cylindrical belts around the internal drum (4), in order to permit rotation of the latter.

The invention is also explained with reference to the following example.

Example

The massage element used was a massage drum with an essentially star-shaped cross-section, as shown in Fig. 4, which is surrounded by several belts in order to be able to drive the drum. The length of this star-shaped massage drum was 2.5 m, while the internal diameter of the star was 1.2 m. The drum was also erected with an inclination of 6°. The internal thread was 0.2 m, so that the residence time of the meat products in the massage drum was approximately 3 min. This thread is detachably fixed in the drum.

The meat products used were backs. These are meat products for bacon preparation which are of a standard width of 20 cm, while the length is 50 to 60 cm, depending on the length of the pig.

Before massage the backs were first injected with a salt solution (brine) using a brine injector. A saturated brine was used as the salt solution. The backs were then subjected to salt-blasting as an external salt treatment on the fat/rind side and on the meat side.

Finally, the injected and salt-blasted backs were massaged in the massage drum described above, which rotated at a speed of approximately 3 r.p.m., the residence time of the bacon cuts in the massage drum being approximately 3 min. During the massage it was ensured that the backs were massaged in the crosswise direction, perpendicular to the axis of rotation of the massage drum. This results in a greater reduction of the final drip formation in the pack than when the backs are massaged in the lengthwise direction (parallel to the axis of rotation of the drum), although even then a beneficial improvement is obtained by comparison with massaging in a known massage drum.

The bacon cuts thus treated had a drip percentage of less than 0.5% after approximately 2 days in refrigerated storage.

**Claims**

1. Continuously operating massage drum (2), in particular suitable for mechanically massaging salted or unsalted meat products, provided with drive means for rotating the drum (2), about the longitudinal axis of the drum, the drum being provided with end plates with a feed and discharge aperture respectively, and the drum (2) comprising a wall having portions thereof comprising inwardly projecting massage elements (3), **characterized in that** the massage elements are formed by the surface of the inside wall (4) which is continuously ribbed in the peripheral direction, and comprising angular transitions (14, 16) projecting into said drum, the summits of said transition being interconnected by straight wall parts (18, 19) of the drum, with the radially outward intersections (13, 15) of said wall parts defining the circumference of said massage drum (2).

2. Massage drum according to claim 1, **characterized in that** the inside wall (4) of the drum (2) has an star-shaped cross-section.

3. Massage drum according to claims 1 or 2, **characterized in that** the massage drum (2) is erected inclined at an angle 3 - 10°.

4. Massage drum according to claim 3, **characterized in that** the massage drum (2) is erected inclined at an angle of about 6°.

5. Massage drum according to claims 1 to 4, **characterized in that** the drum (2) is provided with residence time spread reducing means.

6. Massage drum according to claim 5, **characterized in that** the residence time spread reducing means are detachably fixed in drum (2).

7. Massage drum according to claim 5 or 6, **characterized in that** the residence spread reducing means comprise an internal thread of 0.1 to 0.8 m.

8. Massage drum according to claim 7, **characterized in that** the residence time spread reducing means comprise an internal thread of about 0,2 m to 0,5 m.

9. Massage drum according to claims 1 to 8, **characterized in that** the drive means rotate the drum (2) at a speed of 1 - 8 r.p.m.

10. Method for mechanically massaging salted meat products which are ready for consumption, in particular bacon cuts, through the fact that meat products are treated internally and externally with a salt solution and massaged, **characterized in that** the meat products injected with a salt solution are subjected to a surface salting and the products thus treated are massaged in a massage drum according to claims 1 to 9.

**Patentansprüche**

1. Kontinuierlich arbeitende massierende Trommel (2), insbesondere zum mechanischen Massieren von gesalzenen oder ungesalzenen Fleischprodukten, mit Antriebsmitteln zur Rotation der Trommel (2) um die Längsachse der Trommel, wobei die Trommel Stirnplatten mit jeweils einem Einlaß und einer Ausgabeöffnung besitzt, und wobei die Trommel (2) einen Mantel mit Abschnitten aufweist, die nach innen gerichtete Massageelemente (3) aufweisen,
**dadurch gekennzeichnet, daß**
die Massageelemente durch die Oberfläche der inneren Mantelfläche (4) gebildet sind, wobei die innere Mantelfläche in der peripheren Richtung gerippt ist und eckige Übergänge (14, 16) aufweist, die in die Trommel gerichtet sind, wobei die Scheitelpunkte des Übergangs durch gerade Wandteile (18, 19) der Trommel verbindbar sind, und wobei die radial nach außen gerichteten Abschnitte (13, 15) des Mantels den Umfang der massierenden Trommel (2) beschreiben.

2. Massierende Trommel nach Anspruch 1,
**dadurch gekennzeichnet, daß**
die innere Mantelfläche (4) der Trommel (2) einen sternartig geformten Querschnitt aufweist.

3. Massierende Trommel nach Anspruch 1 oder 2,
**dadurch gekennzeichnet, daß**
die massierende Trommel unter einem Neigungswinkel von etwa 3 - 10 ° gelagert ist.

4. Massierende Trommel nach Anspruch 3,
**dadurch gekennzeichnet, daß**
die massierende Trommel unter einem Neigungswinkel von etwa 6 ° gelagert ist.

5. Massierende Trommel nach Anpruch 1 - 4,
**dadurch gekennzeichnet, daß**
die Trommel Mittel zur Verminderung der Verweilzeitverteilung aufweist.

6. Massierende Trommel nach Anspruch 5,
**dadurch gekennzeichnet, daß**
die Mittel zur Verminderung der Verweilzeitverteilung lösbar mit der Trommel verbunden sind.

7. Massierende Trommel nach Anspruch 5 oder 6,
**dadurch gekennzeichnet,** daß die Mittel zur Verminderung der Verweilzeitverteilung einen innen angeordneten Faden von 0,1 bis 0,8 m Länge umfassen.

8. Massierende Trommel nach Anspruch 7,
**dadurch gekennzeichnet,** daß
die Mittel zur Verminderung der Verweilzeitverteilung einen innen angeordneten Faden von 0,2 bis 0,5 m Länge umfassen.

9. Massierende Trommel nach den Ansprüch 1 bis 8,
**dadurch gekennzeichnet, daß**
die Rotationsgeschwindigkeit der Trommel zwischen 1 und 8 Umdrehungen pro Minute beträgt.

10. Verfahren zum mechanischen Massieren von gesalzenen Fleischprodukten, die fertig zum Verzehr sind, insbesondere Baconstücke, wobei die Fleischprodukte innerlich und äußerlich mit einer Salzlösung behandelt und massiert werden, **dadurch gekennzeichnet**, daß
die mit einer Salzlösung injizierten Fleischprodukte auf ihrer Oberfläche gezalzen werden, und die so behandelten Produkte in einer Trommel gemäß der Ansprüche 1 - 9 massiert werden.

## Revendications

1. Tambour de brassage (2) à fonctionnement continu, convenant en particulier pour le brassage mécanique de produits à base de viande salée ou non salée, pourvu d'un moyen d'entraînement servant à entraîner en rotation le tambour (2) autour de l'axe longitudinal du tambour, le tambour étant pourvu de plaques d'extrémité, présentant respectivement une ouverture d'amenée et d'évacuation, et le tambour (2) comprenant une paroi, dont des parties comprennent des éléments de brassage (3) saillant vers l'intérieur, caractérisé en ce que les éléments de brassage sont formés par la surface de la paroi intérieure (4) qui est nervurée de manière continue dans la direction périphérique et comprend des transitions angulaires (14, 16) faisant saillie dans ledit tambour, les sommets de ladite transition étant interconnectés par des parties de paroi (18, 19) rectilignes du tambour, les intersections (13, 15), radialement extérieures, desdites parties de paroi définissant la circonférence dudit tambour de brassage (2).

2. Tambour de brassage selon la revendication 1, caractérisé en ce que la paroi intérieure (4) du tambour (2) présente une section transversale en forme d'étoile.

3. Tambour de brassage selon la revendication 1 ou 2, caractérisé en ce que l'axe du tambour de brassage (2) est incliné d'un angle de 3 à 10°.

4. Tambour de brassage selon la revendication 3, caractérisé en ce que l'axe du tambour de brassage (2) est incliné d'un angle d'à peu près 6°;

5. Tambour de brassage selon les revendications 1 à 4, caractérisé en ce que le tambour (2) est pourvu de moyens de réduction de la dispersion du temps de séjour.

6. Tambour de brassage selon la revendication 5, caractérisé en ce que les moyens de réduction de la dispersion de temps de séjour sont fixés de manière amovible dans le tambour (2).

7. Tambour de brassage selon la revendication 5 ou 6, caractérisé en ce que les moyens de réduction de la dispersion de temps de séjour comprennent une vis intérieure allant de 0,1 à 0,8 mètres.

8. Tambour de brassage selon la revendication 7, caractérisé en ce que les moyens de réduction de la dispersion du temps de séjour comprennent une vis intérieure allant d'à peu près 0,2 m à 0,5 m.

9. Tambour de brassage selon les revendications 1 à 8, caractérisé en ce que les moyens d'entraînement entraînent en rotation le tambour (2) à une vitesse allant de 1 à 8 t/mn.

10. Procédé de brassage mécanique de produits à base de viande salée prêts à consommer, en particulier des tranches de bacon, dans lequel les produits à base de viande sont traités intérieurement et extérieurement avec une solution salée et brassés, caractérisé en ce que les produits à base de viande dans lesquels on injecte une solution salée sont soumis à un salage de surface et les produits ainsi traités sont brassés dans un tambour de brassage selon les revendications 1 à 9.

FIG:1.

FIG:2.

FIG:3.

FIG:4.

FIG: 5.